Europäisches Patentamt

European Patent Office

Office européen des brevets

(11) Veröffentlichungsnummer : **0 051 173**
**B1**

(12) **EUROPÄISCHE PATENTSCHRIFT**

(45) Veröffentlichungstag der Patentschrift :
05.06.85

(51) Int. Cl.⁴ : **H 01 P 7/06, G 01 S 13/50**

(21) Anmeldenummer : 81108240.3

(22) Anmeldetag : 12.10.81

(54) Dopplerradar.

(30) Priorität : 04.11.80 DE 3041574

(43) Veröffentlichungstag der Anmeldung :
12.05.82 Patentblatt 82/19

(45) Bekanntmachung des Hinweises auf die Patenterteilung : 05.06.85 Patentblatt 85/23

(84) Benannte Vertragsstaaten :
FR GB IT

(56) Entgegenhaltungen :
EP-A- 0 040 818
US-A- 2 834 876
US-A- 3 747 109
US-A- 3 805 262
US-A- 4 042 934
US-A- 4 157 549
WIRELESS WORLD, Vol. 83, Juli 1977, Seiten 36-39
und August 1977, Seiten 37-40 Haywards Heat, GB
M.W. HOSKING "Microwave Intruder Alarm"
WIRELESS WORLD, Februar 1980, Seiten 34-38 und
März 1980, Seiten 79-84 Haywards Heat, GB K. HOL-
FORD "Microwave Intruder Detector"
M.I. Skolnik, Introduction to Radar Systems, McGraw-
Hill, International Student Edition 1980/81 (1962), S.
78/79

(73) Patentinhaber : Siemens Aktiengesellschaft
Berlin und München Wittelsbacherplatz 2
D-8000 München 2 (DE)

(72) Erfinder : Müller, Jörg, Dr. Ing.
Herzog-Tassilo-Ring 44
D-8011 Zorneding (DE)

## Beschreibung

Die Erfindung betrifft ein Dopplerradargerät, bestehend aus zwei, insbesondere in etwa gleiche Abmessungen aufweisenden, im wesentlichen quaderförmigen Hohlraumresonatoren, die mittels einer beiden Hohlraumresonatoren gemeinsamen Seiten-Wand miteinander verbunden sind, bei dem im ersten Hohlraumresonator eine Oszillatordiode angeordnet ist und im zweiten Hohlraumresonator eine (erste) Empfangsdiode vorgesehen ist, bei dem der erste Hohlraumresonator geschlossen und der zweite Hohlraumresonator an der zum zu messenden Objekt hin gerichteten Stirnseite geöffnet ausgeführt ist, und bei dem in der beiden Hohlraumresonatoren gemeinsamen Verbindungswand eine Koppel-Öffnung angebracht ist.

Aus Holford, Microwave intruder detector, Wireless World, Februar 1980, S. 34 bis 38 ist ein Dopplerradargerät mit quaderförmigen Hohlraumresonatoren bekannt, die in Richtung auf das Meßobjekt gesehen hintereinander angebracht sind und die mittels einer beiden Hohlraumresonatoren gemeinsamen Wand miteinander verbunden sind, wobei im ersten Hohlraumresonator eine Gunn-Diode angebracht ist und im zweiten Hohlraumresonator eine Empfangsdiode. Die gemeinsame Trennwand zwischen beiden Hohlraumresonatoren ist zum Einspeisen der Sendefrequenz mit einer Koppelöffnung versehen. Gunn-Diode, Empfangsdiode und Koppelöffnung sind auf der Symmetrieachse des Moduls angeordnet. Der zweite Hohlraumresonator ist an einer Stirnfläche geöffnet ausgeführt, so daß über diese Öffnung sowohl die Sendeleistung ausgestrahlt, sowie die reflektierte Leistung empfangen wird. Dopplerradars mit derart angeordneten Hohlraumresonatoren haben den Nachteil, daß der Abstand zwischen der Rückwand und der Empfangsdiode identisch ist mit dem Abstand zwischen der Empfangsdiode und dem Koppelloch. Bei einer solchen Anordnung lassen sich Pumpleistung und empfangene Leistung nicht getrennt voneinander einstellen.

Aus der gemäß EPÜ Art. 54 (3) als Stand der Technik geltenden EP-A-40 818 ist ein Dopplerradargerät bestehend aus zwei, insbesondere in etwa gleiche Abmessungen aufweisenden im wesentlichen quaderförmigen Hohlraumresonatoren bekannt, die mittels einer beiden Hohlraumresonatoren gemeinsamen Seitenwand, die eine Koppelöffnung enthält miteinander verbunden sind. Der erste Hohlraumresonator ist abgesehen von der Koppelöffnung geschlossen und der zweite Hohlraumresonator an der zum zu messenden Objekt hin gerichteten Stirnseite geöffnet ausgeführt. Im ersten Hohlraumresonator ist eine Oszillatordiode und im zweiten Hohlraumresonator eine Empfangsdiode so angeordnet, daß die Koppelöffnung von der vom zu messenden Objekt weggerichteten Stirnseite des ersten Hohlraumresonators und die Empfangsdiode von der vom zu messenden Objekt weggerichteten Stirnseite des zweiten Hohlraumresonators den gleichen Abstand haben.

Aus M.I. Skolnik, Introduction to Radar Systems, McGraw-Hill, International Student Edition, 1980/81 (1962), Seite 78, 79, ist das Prinzip eines Doppler-Radars, mit dem die Bewegungsrichtung eines bewegten Objekts festgestellt werden kann, in Form eines Blockschaltbilds bekannt. Das empfangene Signal wird dabei in zwei Kanäle, den Kanal A mit einem Mischer A und den Kanal B mit einem Mischer B, aufgespalten. Das empfangene Signal wird im Mischer A mit einem Teil des Sendesignals gemischt, während das empfangene Signal im Mischer B mit einem Teil des Sendesignals gemischt wird, das eine Phasenverschiebung von 90° gegenüber dem Sendersignalanteil aufweist, der in den Mischer A eingespeist wird. Aus einem anschließenden Phasenvergleich der Signale aus Kanal A und B läßt sich die Bewegungsrichtung des bewegten Objekts ermitteln.

Ein Dopplerradar der eingangs erwähnten Art hat eine hohe Empfindlichkeit und ist oberwellenarm. Ein solches Dopplerradar ist auch bei unterschiedlichen Sendeleistungen wirtschaftlich zu fertigen.

Aufgabe der Erfindung ist es, ein Dopplerradar der eingangs erwähnten Art anzugeben, das außer den genannten Eigenschaften die Aufgabe erfüllt, Bewegungsrichtungen zu erkennen und anzuzeigen.

Diese Aufgabe wird bei einem solchen Dopplerradargerät erfindungsgemäß dadurch gelöst, daß im zweiten Hohlraumresonator eine zweite Empfangsdiode angebracht ist und daß die erste Empfangsdiode in einem Abstand von $(2n + 1) \lambda/8$ und die zweite Empfangsdiode in einem Abstand von $(2n + 3) \lambda/8$ von derjenigen Wand des zweiten Hohlraumresonators angebracht ist, die der geöffneten Stirnseite gegenüberliegt, wobei n gleich Null oder eine natürliche Zahl und $\lambda$ die Schwerpunktwellenlänge der im ersten Hohlraumresonator erregten Schwingungen ist, und daß an den Empfangsdioden sowohl eine Frequenzänderung der empfangenen Strahlung, bedingt durch Bewegungen des zu messenden Objekts, wie auch deren von der Bewegungsrichtung des Objekts abhängige zugehörige Phasendifferenz ermittelt wird, wobei als Bezugsphase die an der einen Empfangsdiode gemessene Phase dient, während die Abweichung hiervon an der anderen Empfangsdiode ermittelt wird.

Aus der vorgegebenen Zahlenmenge kann eine Zahl n zwar beliebig gewählt werden. Es ist jedoch das gleiche n bei allen hiervon betroffenen Maßen am erfindungsgemäßen Dopplerradar anzuwenden.

Da die Anordnung der beiden Hohlraumresonatoren zueinander in der eingangs erwähnten Art erfolgt, weist das erfindungsgemäße Dopplerradar eine günstige Ankopplung der beiden Hohlraumresonatoren aneinander und eine großes Ausgangssignal und damit auch eine hohe Empfindlichkeit dieser Meßanordnung auf.

Durch die Anordnung zweier Empfangsdioden im ersten Hohlraumresonator in einem bestimmten Abstand zueinander und in jeweils einem bestimmten Abstand zu reflektierenden Wänden läßt sich außerdem die Bewegungsrichtung eines zu messenden Objekts ermitteln, wenn die Bewegung in Richtung der Verbindungsachse der beiden Empfangsdioden erfolgt. Durch ein geeignetes Zählen von Wellenlängendurchgängen ließe sich außer der Bewegungsrichtung auch die Länge der Entfernungsänderung bestimmen.

Je nach Größe der Öffnung in der Verbindungswand ist ferner die abgestrahlte Leistung einstellbar.

Zur Erhöhung der in den zweiten Hohlraumresonator eingekoppelten Leistung ist es vorteilhaft, daß die Dicke der Verbindungswand im Bereich der Öffnung vermindert ist, insbesondere auf 0,3 mm bis 1,5 mm, und daß im Bereich der Öffnung in der Verbindungswand eine zusätzliche Ausbohrung angeordnet ist, die eine größere Querschnittsfläche als die Öffnung aufweist.

Zur Vermeidung von unerwünschten Oberwellen ist es vorteilhaft, daß die Öffnung in einer Entfernung von $(2n + 1) \cdot \lambda/4$, insbesondere $\lambda/4$, von der vom zu messenden Objekt weggerichteten Stirnseite des ersten Hohlraumresonators angebracht ist.

Es liegt im Rahmen der Erfindung, daß der Durchmesser der Öffnung im Bereich zwischen ganzer und halber Höhe der Verbindungswand gewählt ist.

In einer Weiterbildung der Erfindung ist zum Erzielen einer geringen Baulänge vorgesehen, daß mindestens im ersten Hohlraumresonator ein dielektrischer Einsatz aus einem eine größere Dielektrizitätskonstante als Luft aufweisenden Material angeordnet ist, daß der dielektrische Einsatz in etwa quaderförmig ist und eine Rechteckfläche des Quaders in ihren Abmessungen der Stirnfläche des ersten Hohlraumresonators entspricht, daß der dielektrische Einsatz an der zum zu messenden Objekt hin gewandten Stirnseite des ersten Hohlraumresonators angeordnet ist und daß der dielektrische Einsatz aus Kunststoff, insbesondere Polyvinylchlorid, oder Keramik besteht.

Es liegt im Rahmen der Erfindung, daß zur Regulierung der Sendeleistung im zweiten Hohlraumresonator ein insbesondere in der Resonatormitte angebrachter Metallstift vorgesehen ist, dessen in den zweiten Hohlraumresonator eintauchende Länge variabel ist, daß der Metallstift an der von dem zu messenden Objekt weg gerichteten Stirnseite des zweiten Hohlraumresonators in einer Entfernung von $(2n + 1) \lambda/4$ angebracht wird und daß die in den zweiten Hohlraumresonator eintauchende Länge des Metallstiftes maximal der halben Höhe des Hohlraumresonators entspricht.

Es ist auch vorteilhaft, daß zur Regulierung und gleichzeitigen Symmetrierung der Sendeleistung im zweiten Hohlraumresonator zwei Metallstifte symmetrisch zur Symmetrieachse des zweiten Hohlraumresonators vorgesehen sind, deren in den zweiten Hohlraumresonator eintauchende Länge variabel ist und die von der vom zu messenden Objekt weggerichteten Stirnseite des zweiten Hohlraumresonators in einer Entfernung von $(2n + 1) \lambda/4$ so angebracht sind, daß die in den zweiten Hohlraumresonator eintauchende Länge der Metallstifte maximal der halben Höhe des Hohlraumresonators entspricht. Die Verwendung zweier symmetrisch angeordneter Metallstifte anstelle eines Metallstiftes bewirkt eine Symmetrierung der Signalhöhe, was wiederum eine höhere Empfindlichkeit der Gesamtanordnung infolge direkt vergleichbarer Signale beider Dioden bewirkt.

Zur rationellen Fertigung ist es vorteilhaft, daß der erste Hohlraumresonator an der zum zu messenden Objekt hin gerichteten Stirnseite mittels eines mit dem Hohlraumresonator kaltverschweißbaren Deckels geschlossen ist.

Vorzugsweise wird das erfindungsgemäße Dopplerradar als Näherungsschalter, Geschwindigkeitsmesser oder Bewegungsrichtungsanzeiger verwendet. Solche Bewegungsrichtungsanzeiger lassen sich vorteilhaft bei der Steuerung von Ampeln oder als Türöffner einsetzen.

Die Erfindung wird im folgenden anhand zweier Figuren näher erläutert.

Figur 1 zeigt ein Ausführungsbeispiel für ein erfindungsgemäßes Dopplerradar,

Figur 2 zeigt einen Schnitt quer durch das in Fig. 1 gezeigte Ausführungsbeispiel entlang der Linie II-II.

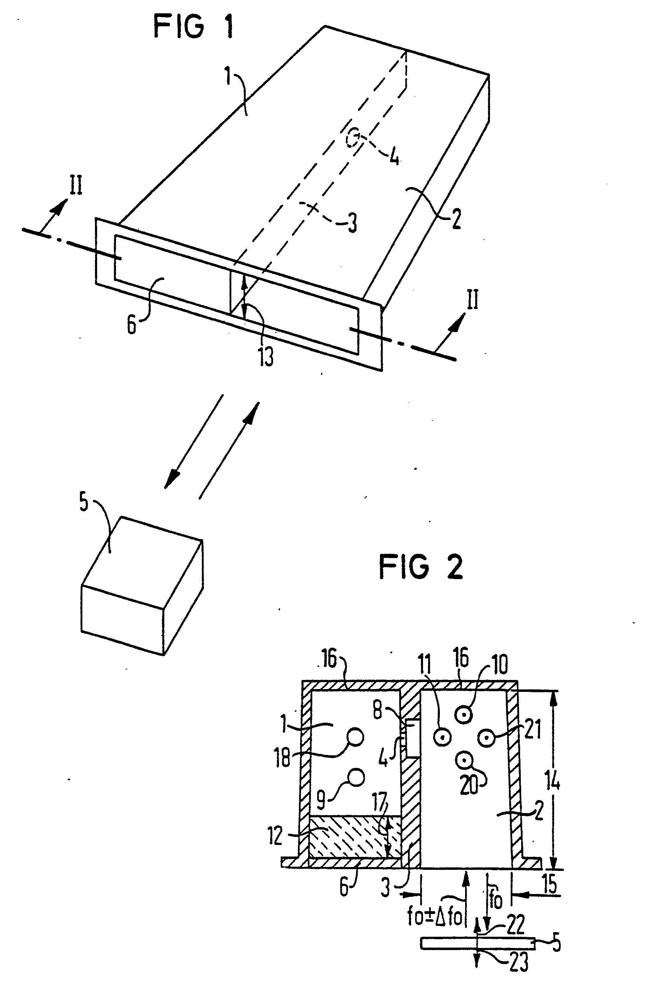

Das in der Figur 1 gezeigte Ausführungsbeispiel besteht aus einem ersten Hohlraumresonator 1, in dem eine in der Figur aus Gründen der Übersichtlichkeit nicht dargestellte Oszillatordiode, beispielsweise eine Gunn-Diode, angeordnet ist, und einem zweiten Hohlraumresonator 2, in dem sich eine ebenfalls in der Figur nicht dargestellte Empfangsdiode, beispielsweise eine Schottky-Diode, befindet. Beide Hohlraumresonatoren 1 und 2 sind durch eine Verbindungswand 3, in der sich eine beispielsweise kreisförmige Öffnung 4 befindet, getrennt. Diejenige Stirnseite des ersten Hohlraumresonators 1, die zum zu messenden, in der Regel bewegten Objekt 5 hin weist, ist beispielsweise mittels eines Deckels 6 verschlossen. Die entsprechende Stirnseite des zweiten Hohlraumresonators 2 ist offen ausgeführt. Die Resonatoren 1 und 2 können die gleichen Abmessungen aufweisen und sind im gezeigten Beispiel quaderförmig ausgeführt, wobei die zum Objekt 5 hin gerichteten Stirnseiten einen etwas größeren Querschnitt als die gegenüberliegenden Stirnseiten aufweisen können. Es können aber auch andere zur Erzeugung von Mikrowellen geeignete Resonatorformen verwendet werden.

Figur 2 zeigt einen waagerechten Schnitt durch die Mitte des in Fig. 1 gezeichneten Ausführungsbeispiels. Es kommen die gleichen Bezugszeichen wie in Fig. 1 zur Anwendung. Im ersten Hohlraumresonator sind die Oszillatordiode 9 und der Frequenzeinstellstift 18 vorzugsweise auf der längsten Mittelachse des ersten Hohlraumresonators 1 angeordnet. Im zweiten Hohlraumresonator 2 sind die erste Empfangsdiode 10 in einem Abstand von $(2n + 1) \lambda/8$ und die zweite Empfangsdiode 20 in einer Entfernung von $(2n + 3) \lambda/8$ von der Resonatorrückwand 16 angebracht. Die Metallstifte 11 und 21 sind symmetrisch zur größten Mittelachse des Hohlraumresonators 2 und vorzugsweise sowohl mittig zur Öffnung 4 als auch zur Anordnung der Empfangsdioden 10 und 20 angebracht.

Jede Verschiebung eines Objekts 5 vor der Öffnung des zweiten Hohlraumresonators 2 in Richtung der Pfeile 22 bzw. 23 bewirkt eine Frequenzänderung der auf das bewegte Objekt 5 einfallenden Strahlung mit der Frequenz $f_0$ von $+ \Delta f_0$ bzw. $- \Delta f_0$. Da an den Empfangsdioden 20 bzw. 10 sowohl die Frequenzänderungen wie auch die Phasendifferenz ermittelt wird, wobei als Bezugsphase eine der an den Empfangsdioden gemessenen Phasen dient, während die Abweichung hierzu an der zweiten Empfangsdiode ermittelt wird, und da die beiden Empfangsdioden 20 und 10 eine Entfernung von $\lambda/4$ voneinander aufweisen, läßt sich mit dieser Anordnung nicht nur die Bewegung eines Objekts, sondern auch die Bewegungsrichtung, d. h. die Bewegung in Richtung des Pfeils 22 oder 23 ermitteln.

Eine Ausbohrung 8 im Bereich des Lochs 4 in der Verbindungswand 3 dient der besseren Leistungsübertragung zwischen beiden Resonatoren. Eine Feinregelung und Symmetrisierung der Sendeleistung ist mittels der Metallstifte 21 und 11 zu erreichen. Die Metallstifte 21 und 11 sind so angebracht, daß ihre Länge senkrecht zur Zeichenebene variiert werden kann. Die Metallstifte 11 und 21 können beispielsweise als Schrauben ausgeführt sein.

Mittels eines dielektrischen Einsatzes 12 kann die Baulänge des Dopplerradars verkürzt werden. Als Material für den Einsatz 12 eignen sich beliebige Dielektrika mit einer höheren Dielektrizitätskonstante als Luft, beispielsweise Kunststoffe wie Polyvinylchlorid. Bei Verwendung von dielektrischen Einsätzen 12 mit unterschiedlicher Dielektrizitätskonstante und/oder unterschiedlicher mechanischer Länge kann der Hohlraumresonator 1 in einfacher Weise und ohne großen Umrüstungsaufwand bei verschiedenen Frequenzen betrieben werden. Bei Verwendung eines erfindungsgemäßen ersten Hohlraumresonators 1, der geschlossen ausgeführt ist, ist der dielektrische Einsatz 12 in einfacher Weise durch Öffnen des Deckels 6 einsetz- bzw. auswechselbar. Besonders vorteilhaft ist es, den dielektrischen Einsatz so zu wählen, daß eine temperaturbedingte Frequenzänderung des Resonators 1 kompensiert wird, d. h., daß die elektrische Länge des Einsatzes 12 sich bei Temperaturänderungen so verkürzt, wie sich die elektrische Länge des Resonators 1 verlängert. Ein geeignetes keramisches Material ist beispielsweise $(Zr_x \, Ti_y \, Sn_z) \, O_4$, wobei die Summe der drei Indizes x, y und z zwei ist.

Die abgestrahlte Leistung des Dopplerradars ist durch Wahl des Durchmessers der Öffnung 4 grob einstellbar. So ist die abgestrahlte Leistung bei einem Lochdurchmesser, der der Hälfte der Höhe 13 der Verbindungswand 3 entspricht, beispielsweise um 20 dB geringer als bei Verwendung einer Öffnung 4, deren Querschnitt der gesamten Höhe 13 der Verbindungswand 3 entspricht. Eine Vergrößerung der Sendeleistung ist durch Verringerung der Wanddicke der Verbindungswand 3 möglich. Aus Gründen der mechanischen Stabilität empfiehlt es sich jedoch zu diesem Zwecke lediglich im Bereich der Öffnung 4 eine Bohrung 8 anzubringen, deren Durchmesser größer als der Durchmesser der Öffnung 4 ist, insbesondere der gesamten Höhe 13 der Verbindungswand 3 entspricht.

Die Abmessungen der Resonatoren 1 und 2 werden üblicherweise so gewählt, daß die Wandlänge 14 der Resonatoren in etwa der Wellenlänge $\lambda$ der zu erzeugenden Schwingung entspricht, daß die Breite 15 einer Resonatorenstirnwand im Bereich zwischen $\lambda/2$ und $\lambda$ liegt und daß die Höhe 13 der Resonatoren im Bereich zwischen $\lambda/4$ und $\lambda/2$ liegt. Prinzipiell beträgt die Wandlänge 14 der Resonatoren $n \cdot \lambda/2$ bei ganzzahligem n.

Zur Vermeidung von störenden Oberwellen, die beispielsweise aufgrund postalischer Vorschriften zu unterdrücken sind, empfiehlt es sich, die Öffnung 4 in einer Entfernung von $(2n + 1) \cdot \lambda/4$ insbesondere $\lambda/4$ von der Resonatorrückwand 16 des ersten Hohlraumresonators 1 anzuordnen. Der Frequenzeinstellstift wird auf der längsten Mittelachse des ersten Hohlraumresonators 1 vorzugsweise in der gleichen Entfernung von der Resonatorrückwand 16 des ersten Hohlraumresonators 1 angeordnet wie die Öffnung 4. Die zur Feinregulierung und Symmetrisierung der Sendeleistung dienenden Metallstifte 11 und 21 können in einer Entfernung von $(2n + 1) \cdot \lambda/4$ vorzugsweise von $\lambda/4$ von der Rückwand 16 des zweiten Hohlraumresonators 2 angeordnet werden. Mit drehbaren Schrauben, die maximal bis zur halben Höhe 13 des Resonators 2 in diesen hineinragen, ist die Sendeleistung beispielsweise um 15 dB bis 20 dB im Vergleich zur Maximalleistung absenkbar. Durch die erfindungsgemäße Ausführung des Dopplerradars ist dessen Leistung auch ohne den Einsatz von Absorptionsmaterialien einstellbar. Die Empfangsdioden 10 und 20 bekommen bei geschlossenem ersten Resonator 1 und mit einer Öffnung 4 versehener Verbindungswand 3 einen erheblich größeren Anteil der Sendeleistung als bei der aus dem Stand der Technik bekannten Anordnung ohne Öffnung 4 und mit offen ausgeführtem ersten Hohlraumresonator. Dadurch und durch die Symmetrierung der Signale an den Empfangsdioden bezüglich Leistung wird die Empfindlichkeit des Dopplerradars erheblich verbessert. Ferner ist trotz großer Empfindlichkeit die benötigte Öffnungsfläche des Dopplerradars um die Hälfte verringert, was für zahlreiche Anwendungsfälle von großem Vorteil ist.

Für das erfindungsgemäße Dopplerradar können Hohlraumresonatoren, die im Bereich zwischen 1 GHz und 200 GHz schwingen, verwendet werden, wobei bei sehr hohen Frequenzen vorteilhafterweise anstelle einer Gunn-Diode als Oszillatordiode eine Lawinenlaufzeit-Diode verwendet wird. Aus postalischen Gründen wird ein entsprechendes Dopplerradar in der Regel im Frequenzbereich von 9,3 GHz bis 10,7 GHz betrieben. Es kann zur Erfassung beliebiger bewegter Objekte, beispielsweise Menschen, verwendet werden und somit als Einbruchsschutz oder Näherungsschalter benutzt werden. Durch die Verwendung zweier Empfangsdioden kann auch die Bewegungsrichtung bestimmt werden, weshalb es als Türöffner und zur Ampelsteuerung eingesetzt werden kann. Ein Einsatz als Geschwindigkeitsmesser, beispielsweise zur Geschwindigkeitsmessung von Fahrzeugen, ist ebenfalls möglich.

Beispiel :

Abmessungen der Hohlraumresonatoren 1 und 2 :
Länge 14 : 42,5 mm
Breite 15 (Frontseite) : 21 mm
Höhe 13 (Frontseite) : 10,3 mm
Durchmesser der Öffnung 4 (= Wandhöhe 13) : 10,3 mm
Betriebsfrequenz : 9,35 GHz
Abgestrahlte Leistung : 25 mW
Bei einem Durchmesser der Öffnung 4, der der halben Höhe 13 der Verbindungswand 3 entspricht, liegt die abgestrahlte Leistung in der Größenordnung von 1 mW.

Als Oszillatordiode kommt eine handelsübliche, mit einer stabilisierten Spannung von 8 V versorgte Gunndiode zum Einsatz. Die Signale der als Empfangsdioden 10 und 20 verwendeten Schottky-Dioden werden mitels eines dreistufigen, rauscharmen Verstärkers und 60 dB verstärkt und anschließend ausgewertet.

Bei Verwendung eines dielektrischen Einsatzes 12 aus $(Zr_{0,5}TiSn_{0,5})O_4$ mit einer Länge 17 von 2 mm kann die Baulänge 14 des Dopplerradars von 42,5 mm auf 36,5 mm bei gleicher Betriebsfrequenz verkürzt werden und gleichzeitig die Temperaturdrift der Betriebsfrequenz erheblich reduziert werden. Bei Wandstärken in der Größenordnung von 3 mm kann die Bohrung 8 so ausgeführt werden, daß die Restwandstärke 0,5 mm bis 1,5 mm beträgt.

**Patentansprüche**

1. Dopplerradargerät, bestehend aus zwei, insbesondere in etwa gleiche Abmessungen aufweisenden, im wesentlichen quaderförmigen Hohlraumresonatoren, die mittels einer beiden Hohlraumresonatoren gemeinsamen Seiten-Wand (3), die eine Koppelöffnung (4) enthält, miteinander verbunden sind, bei dem der erste Hohlraumresonator (1) abgesehen von der Koppelöffnung geschlossen und der zweite Hohlraumresonator (2) an der zum zu messenden Objekt (5) hin gerichteten Stirnseite geöffnet ausgeführt ist, und bei dem im ersten Hohlraumresonator (1) eine Oszillatordiode (9) und im zweiten Hohlraumresonator (2) eine (erste) Empfangsdiode (10) angeordnet sind, dadurch gekennzeichnet, daß im zweiten Hohlraumresonator (2) eine zweite Empfangsdiode (20) angebracht ist und daß die erste Empfangsdiode (10) in einem Abstand von $(2n + 1)\,\lambda/8$ und die zweite Empfangsdiode (20) in einem Abstand von $(2n + 3)\,\lambda/8$ von derjenigen Wand (16) des zweiten Hohlraumresonators (2) angebracht ist, die der geöffneten Stirnseite gegenüberliegt, wobei n gleich Null oder eine natürliche Zahl und $\lambda$ die Schwerpunktwellenlänge der im ersten Hohlraumresonator (1) erregten Schwingungen ist, und daß an den Empfangsdioden (10, 20) sowohl eine Frequenzänderung der empfangenen Strahlung, bedingt durch Bewegungen des zu messenden Objekts (5), wie auch deren von der Bewegungsrichtung des Objekts abhängige zugehörige Phasendifferenz ermittelt wird, wobei als Bezugsphase die an der einen Empfangsdiode (10 oder 20) gemessene Phase dient, während die Abweichung hiervon an der anderen Empfangsdiode (20 bzw. 10) ermittelt wird.

2. Dopplerradargerät nach Anspruch 1, dadurch gekennzeichnet, daß die Dicke der Verbindungswand (3) im Bereich der Koppelöffnung (4) vermindert ist.

3. Dopplerradargerät nach Anspruch 2, dadurch gekennzeichnet, daß die Dicke der Verbindungswand (3) im Bereich der Koppelöffnung (4) auf 0,3 mm bis 1,5 mm verringert ist.

4. Dopplerradargerät nach Anspruch 2 oder 3, dadurch gekennzeichnet, daß im Bereich der Koppelöffnung (4) in der Verbindungswand (3) eine zusätzliche Ausbohrung (8) angeordnet ist, die eine größere Querschnittsfläche als die Koppelöffnung (4) aufweist.

5. Dopplerradargerät nach einem der Ansprüche 1 bis 4, dadurch gekennzeichnet, daß die Koppelöffnung (4) in einer Entfernung von $(2n + 1)\,\lambda/4$, insbesondere $\lambda/4$, von der vom zu messenden Objekt weggerichteten Stirnseite (16) des ersten Hohlraumresonators (1) angebracht ist.

6. Dopplerradargerät nach einem der Ansprüche 1 bis 5, dadurch gekennzeichnet, daß der Durchmesser der Koppelöffnung (4) im Bereich zwischen ganzer und halber Höhe der Verbindungswand (3) gewählt ist.

7. Dopplerradargerät nach einem der Ansprüche 1 bis 6, dadurch gekennzeichnet, daß mindestens im ersten Hohlraumresonator (1) ein dielektrischer Einsatz (12) aus einem eine größere Dielektrizitätskonstante als Luft aufweisenden Material angeordnet ist.

8. Dopplerradargerät nach Anspruch 7, dadurch gekennzeichnet, daß der dielektrische Einsatz (12) in etwa quaderförmig ist und eine Rechteckfläche des Quaders in ihren Abmessungen einer Stirnfläche des ersten Hohlraumresonators (1) entspricht.

9. Dopplerradargerät nach Anspruch 7 oder 8, dadurch gekennzeichnet, daß der dielektrische Einsatz (12) an der zum zu messenden Objekt (5) hin gewandten Stirnseite des ersten Hohlraumresonators (1) angeordnet ist.

10. Dopplerradargerät nach einem der Ansprüche 7 bis 9, dadurch gekennzeichnet, daß der dielektrische Einsatz (12) aus Kunststoff, insbesondere aus Polyvinylchlorid besteht.

11. Dopplerradargerät nach einem der Ansprüche 7 bis 9, dadurch gekennzeichnet, daß der dielektrische Einsatz (12) aus Keramik besteht.

12. Dopplerradargerät nach einem der Ansprüche 1 bis 11, dadurch gekennzeichnet, daß zur Regulierung der Sendeleistung im zweiten Hohlraumresonator (2) ein insbesondere in der Resonatormitte angebrachter Metallstift vorgesehen ist, dessen in den zweiten Hohlraumresonator (2) eintauchende Länge variabel ist.

13. Dopplerradargerät nach einem der Ansprüche 1 bis 11, dadurch gekennzeichnet, daß zur Regulierung und Symmetrierung der Sendeleistung im zweiten Hohlraumresonator (2) zwei Metallstifte (11, 21) symmetrisch zur Symmetrieachse des zweiten Hohlraumresonators (2) vorgesehen sind, deren in den zweiten Hohlraumresonator (2) eintauchende Länge variabel ist.

14. Dopplerradargerät nach den Ansprüchen 12 oder 13, dadurch gekennzeichnet, daß die Metallstifte (11, 21) von der vom zu messenden Objekt weggerichteten Stirnseite des zweiten Hohlraumresonators (2) in einer Entfernung von $\lambda/4$ $(2n + 1)$ angebracht sind, wobei $\lambda$ die Wellenlänge der im ersten Hohlraumresonator (1) erregten Schwingungen bedeutet.

15. Dopplerradargerät nach einem der Ansprüche 12 bis 14, dadurch gekennzeichnet, daß die in den zweiten Hohlraumresonator (2) eintauchende Länge der Metallstifte (11, 21) maximal der halben Höhe (13) des Hohlraumresonators (2) entspricht.

16. Dopplerradargerät nach einem der Ansprüche 1 bis 15, dadurch gekennzeichnet, daß der erste Hohlraumresonator (1) an der zum zu messenden Objekt (5) hin gerichteten Stirnseite mittels eines mit dem Hohlraumresonator kaltverschweißten Deckels (6) geschlossen ist.

17. Verwendung des Dopplerradargeräts nach einem der Ansprüche 1 bis 16 als Näherungsschalter.

18. Verwendung des Dopplerradargeräts nach einem der Ansprüche 1 bis 16 als Geschwindigkeitsmesser.

19. Verwendung des Dopplerradargeräts nach einem der Ansprüche 1 bis 16 als Bewegungsrichtungsanzeiger.

## Claims

1. A Doppler-radar device consisting of two generally parallelepiped cavity resonators, having substantially identical dimensions and mutually connected by a lateral wall (3) common to the two cavity resonators and comprising a coupling aperture (4), wherein the first cavity resonator (1) is sealed at its end remote from the coupling aperture and the second cavity resonator (2) has an open end face directed towards the object (5) to be measured, and wherein an oscillator diode (9) is arranged in the first cavity resonator (1) and a (first) receiving diode (10) is arranged in the second cavity resonator (2), characterised in that a second receiving diode (20) is fixed in the second cavity resonator (2) and that the first receiving diode (10) is arranged at a distance of $(2n + 1)\,\lambda/8$ and the second receiving diode (20) is arranged at a distance of $(2n + 3)\,\lambda/8$ from the wall (16) of the second cavity resonator (2) opposite the open end face, where n equals zero or a natural number and $\lambda$ is the wavelength of the central frequency of the oscillations which are excited in the first cavity resonator (1), and that both a frequency change of the received radiation conditional upon motions of the object (5) to be measured, and also its assigned phase difference dependent upon the direction of motion of the object are determined at the receiving diodes (10, 20), where the phase which is measured at the one receiving diode (10 or 20) serves as a reference phase, whereas the deviation therefrom is determined at the other receiving diode (20 or 10 as the case may be).

2. A Doppler-radar device as claimed in claim 1, characterised in that the thickness of the connecting wall (3) is reduced in the region of the coupling aperture (4).

3. A Doppler-radar device as claimed in claim 2, characterised in that the thickness of the connecting wall (3) is decreased to a value of from 0.3 mm to 1.5 mm in the region of the coupling aperture (4).

4. A Doppler-radar device as claimed in claim 2 or 3, characterised in that in the region of the coupling aperture (4), an additional bore (8), having a cross-sectional surface larger than the coupling aperture (4) is arranged in the connecting wall (3).

5. A Doppler-radar device as claimed in one of claims 1 to 4, characterised in that the coupling aperture (4) is arranged at a distance of $(2n + 1)\,\lambda/4$, in particular $\lambda/4$, from the end face (16) of the first cavity resonator (1) remote from the object to be measured.

6. A Doppler-radar device as claimed in one of claims 1 to 5, characterised in that the diameter of the coupling aperture (4) is selected to be in the region between the full height and half the height of the connecting wall (3).

7. A Doppler-radar device as claimed in one of claims 1 to 6, characterised in that at least in the first cavity resonator (1) there is arranged a dielectric insert (12) consisting of a material which has a larger dielectric constant than air.

8. A Doppler-radar device as claimed in claim 7, characterised in that the dielectric insert (12) approximately has the form of a parallelepiped and a rectangular surface of the parallelepiped has the same dimensions as an end face of the first cavity resonator (1).

9. A Doppler-radar device as claimed in claim 7 or 8, characterised in that the dielectric insert (12) is arranged on the end face of the first cavity resonator (1) which faces towards the object (5) to be measured.

10. A Doppler-radar device as claimed in one of claims 7 to 9, characterised in that the dielectric insert (12) consists of a synthetic resin, in particular polyvinyl chloride.

11. A Doppler-radar device as claimed in one of claims 7 to 9, characterised in that the dielectric insert (12) consists of a ceramic.

12. A Doppler-radar device as claimed in one of claims 1 to 11, characterised in that in order to control the transmitting power in the second cavity resonator (2), there is provided extending thereinto a variable length metal pin arranged in particular at the centre of the resonator.

13. A Doppler-radar device as claimed in one of claims 1 to 11, characterised in that in order to control and symmetrize the transmitting power in the second cavity resonator (2), two metal pins (11, 21) are arranged symmetrically with respect to the axis of symmetry of the second cavity resonator (2), to extend into the second cavity resonator (2) by a variable length.

14. A Doppler-radar device as claimed in claims 12 or 13, characterised in that the metal pins (11, 21) are arranged at a distance of $\lambda/4$ $(2n + 1)$ from that end face of the second cavity resonator (2) remote from the object to be measured, where $\lambda$ represents the wavelength of the oscillations excited in the first cavity resonator (1).

15. A Doppler-radar device as claimed in one of claims 12 to 14, characterised in that the length of the metal pins (11, 21), extending into the second cavity resonator (2), corresponds at a maximum to half the height (13) of the cavity resonator (2).

16. A Doppler-radar device as claimed in one of claims 1 to 15, characterised in that at its end face facing towards the object (5) to be measured the first cavity resonator (1) is sealed by a cover (6) cold-welded to the cavity resonator.

17. Use of the Doppler-radar device as claimed in one of claims 1 to 16 as a proximity switch.

18. Use of the Doppler-radar device as claimed in one of claims 1 to 16 as a speed indicator.

19. Use of the Doppler-radar device as claimed in one of claims 1 to 16 as an indicator for the direction of motion.

## Revendications

1. Appareil radar Doppler formé de deux résonateurs à cavité de forme sensiblement parallélépipédique, possédant notamment des dimensions approximativement identiques et qui sont reliés entre eux au moyen d'une paroi latérale (3), qui leur est commune et qui contient un orifice de couplage (4), et dans lequel le premier résonateur à cavité (1) est fermé sauf au niveau de l'orifice de couplage et le second résonateur à cavité (2) est ouvert sur la face frontale tournée en direction de l'objet à mesurer (5), et dans lequel une diode d'oscillateur (9) est disposée dans le premier résonateur à cavité (1) et une (première) diode réceptrice (10) est disposée dans le second résonateur à cavité (2), caractérisé par le fait qu'une seconde diode réceptrice (20) est disposée dans le second résonateur à cavité (2) et que la première diode réceptrice (10) et la seconde diode réceptrice (20) sont disposées respectivement à une distance égale $(2n + 1)$ $\lambda/8$ et à une distance égale à $(2n + 3)$ $\lambda/8$ de la paroi (16) du second résonateur à cavité (2), qui est disposée en vis-à-vis de la face frontale ouverte, n étant égal à zéro ou étant un entier naturel et $\lambda$ étant la longueur d'onde du barycentre des oscillations déclenchées dans le premier résonateur à cavité (1), et qu'au niveau des diodes réceptrices (10, 20) se trouvent déterminées aussi bien une variation de fréquence du rayonnement reçu, qui est conditionnée par des déplacements de l'objet à mesurer (5), que la différence de phase associée, qui dépend du sens de déplacement de l'objet, auquel cas on utilise comme phase de référence la phase mesurée au niveau de l'une des diodes réceptrices (10 ou 20), tandis que l'écart par rapport à cette phase de référence est déterminé au niveau de l'autre diode réceptrice (20 ou 10).

2. Appareil radar Doppler suivant la revendication 1, caractérisé par le fait que l'épaisseur de la paroi de liaison (3) est réduite au voisinage de l'orifice de couplage (4).

3. Appareil radar Doppler suivant la revendication 2, caractérisé par le fait que l'épaisseur de la paroi de liaison (3) au voisinage de l'orifice de couplage (4) est réduite à une valeur comprise entre 0,3 mm et 1,5 mm.

4. Appareil radar Doppler suivant la revendication 2 ou 3, caractérisé par le fait qu'au voisinage de l'orifice de couplage (4) situé dans la paroi de liaison (3) se trouve ménagé un évidement supplémentaire (8) qui possède une surface en section transversale supérieure à celle de l'orifice de couplage (4).

5. Appareil radar Doppler suivant l'une des revendications 1 à 4, caractérisé par le fait que l'orifice de couplage (4) est situé à une distance égale à $(2n + 1)$ $\lambda/4$, notamment à une distance égale à $\lambda/4$, de la face frontale (16), dirigée à l'opposé de l'objet à mesurer, du premier résonateur à cavité (1).

6. Appareil radar Doppler suivant l'une des revendications 1 à 5, caractérisé par le fait que le diamètre de l'orifice de couplage (4) est choisi dans la plage de valeurs comprise entre la hauteur totale et la demi-hauteur de la paroi de liaison (3).

7. Appareil radar Doppler suivant l'une des revendications 1 à 6, caractérisé par le fait qu'un insert diélectrique (12) constitué en un matériau possédant une constante diélectrique supérieure à celle de l'air, est disposé au moins dans le premier résonateur à cavité (1).

8. Appareil radar Doppler suivant la revendication 7, caractérisé par le fait que l'insert diélectrique (12) possède une forme approximativement parallélépipédique et une surface rectangulaire

7

du parallélépipède correspond, du point de vue de ses dimensions, à une surface frontale du premier résonateur à cavité (1).

9. Appareil radar Doppler suivant la revendication 7 ou 8, caractérisé par le fait que l'insert diélectrique (12) est disposé sur la face frontale du premier résonateur à cavité (1), qui est tournée en direction de l'objet à mesurer (5).

10. Appareil radar Doppler suivant l'une des revendications 7 à 9, caractérisé par le fait que l'insert diélectrique (12) est constitué en une matière plastique, notamment en du polychlorure de vinyle.

11. Appareil radar Doppler suivant l'une des revendications 7 à 9, caractérisé par le fait que l'insert diélectrique (12) est constitué par une céramique.

12. Appareil radar Doppler suivant l'une des revendications 1 à 11, caractérisé par le fait que pour la régulation de la puissance d'émission dans le second résonateur à cavité (2), il est prévu une tige métallique disposée notamment au centre du résonateur et dont la longueur pénétrant dans le second résonateur à cavité (2) est variable.

13. Appareil radar Doppler suivant l'une des revendications 1 à 11, caractérisé par le fait que pour la régulation et la symétrisation de la puissance d'émission dans le second résonateur à cavité (2) il est prévu deux tiges métalliques (11, 21) disposées symétriquement par rapport à l'axe de symétrie du second résonateur à cavité (2) et dont la longueur pénétrant dans ce résonateur est variable.

14. Appareil radar Doppler suivant la revendication 12 ou 13, caractérisé par le fait que les tiges métalliques (11, 21) sont disposées à une distance égale à $\lambda/4 (2n + 1)$ de la face frontale du second résonateur à cavité (2), qui est tournée à l'opposé de l'objet à mesurer, $\lambda$ représentant la longueur d'onde des oscillations déclenchées dans le premier résonateur à cavité (1).

15. Appareil radar Doppler suivant l'une des revendications 12 à 14, caractérisé par le fait que la longueur de pénétration des tiges métalliques (11, 21) dans le second résonateur à cavité (2) correspond au maximum à la moitié de la hauteur (13) de ce résonateur à cavité.

16. Appareil radar Doppler suivant l'une des revendications 1 à 15, caractérisé par le fait que le premier résonateur à cavité (1) est fermé, au niveau de la face frontale tournée vers l'objet à mesurer (5), au moyen d'un couvercle (6) soudé à froid sur le résonateur à cavité.

17. Utilisation de l'appareil radar Doppler suivant l'une des revendications 1 à 16 en tant que commutateur de proximité.

18. Utilisation de l'appareil radar Doppler suivant l'une des revendications 1 à 16 en tant que cinémomètre.

19. Application de l'appareil radar Doppler suivant l'une des revendications 1 à 16 en tant que dispositif indicateur d'une direction de déplacement.

# FIG 1

# FIG 2